# EUROPÄISCHE PATENTSCHRIFT

(11) **EP 0 321 770 B1**
(45) Veröffentlichungstag und Bekanntmachung des Hinweises auf die Patenterteilung: **17.02.1993**
(21) Anmeldenummer: 88120287.3
(22) Anmeldetag: 05.12.1988
(51) Int. Cl.: F16J 15/32

(54) **Dichtungsanordnung**
Seal assembly
Dispositif d'étanchéité

(30) Priorität: 23.12.1987 DE 3743726
(43) Veröffentlichungstag der Anmeldung: 28.06.1989
(73) Patentinhaber: Busak + Luyken GmbH & Co., D-70565 Stuttgart (DE)
(72) Erfinder: Edlund, Roy, D-7000 Stuttgart 1 (DE)
(74) Vertreter: KOHLER SCHMID + PARTNER

(56) Entgegenhaltungen:
- EP-A- 0 242 741
- DE-C- 3 620 539
- US-A- 3 614 114

## Beschreibung

Die Erfindung betrifft eine Anordnung zum Abdichten des Spaltes zwischen zwei zueinander konzentrischen, gegeneinander beweglichen Maschinenteilen, von denen das erste eine Nut und das zweite eine der Nut gegenüberliegende glatte Anlagefläche aufweist, mit einem in die Nut des ersten Maschinenteiles eingelegten Dichtring aus zähelastischem Kunststoff, dessen der Anlageflache zugewandte Umfangsfläche eine ringförmige Aussparung aufweist, so daß der Dichtring mit nahe seinen Enden angeordneten Dichtkanten an der Anlagefläche des zweiten Maschinenteiles anliegt, und mit einem zwischen Dichtring und Nutengrund angeordneten, den Dichtring radial belastenden Spannring aus gummielastischem Material, dessen axiale Ausdehnung geringer ist als diejenige des Dichtringes und dessen axiale Lage in bezug auf den Dichtring derart fixiert ist, daß er sich etwa mittig zwischen den beiden Dichtkanten befindet.

Eine solche Dichtungsanordnung ist aus der DE-C-36 13 880 (EP-A-0 242 741) bekannt. Bei dieser Dichtungsanordnung weist die den Dichtring und den Spannring aufnehmende Nut des einen Maschinenteiles im Bereich ihrer Mitte eine Vertiefung auf, in die der Spannring eingreift, so daß diese Vertiefung die axiale Lage des Spannringes ebenso fixiert wie die Nut die axiale Lage des Dichtringes fixiert. Die Ausbildung einer Nut, die im Bereich ihrer Mitte eine Vertiefung aufweist, erfordert einen beträchtlich erhöhten Arbeitsaufwand bei der Herstellung der Dichtungsanordnung. Insbesondere macht sie es unmöglich, diese Dichtungsanordnung anstelle von anderen Dichtungsanordnungen einzusetzen, bei denen die die Dichtringe aufnehmende Nut keine solche Vertiefung aufweist. Zwar könnte man in die Nut herkömmlicher Dichtungsanordnungen auch Stützkörper einlegen, die den Spannring seitlich abstützen, jedoch würde auch hierdurch eine solche Dichtungsanordnung erheblich kompliziert.

Die bekannte Dichtung gehört zu der Art, die axial hintereinander geschaltete, im Betrieb wirksame Dichtkanten aufweist, so daß sie wie eine Tandem-Dichtung wirkt. Demgemäß kann sich auch in dem Raum zwischen den beiden Dichtkanten das abzusperrende, unter hohem Druck stehende Medium ansammeln, daß die hochdruckseitige Dichtkante passiert. Auf diese Weise kann es in dem Raum zwischen den beiden Dichtkanten zu einem sehr starken Druckanstieg kommen, mit der Folge, daß ein Abheben der Dichtkanten von der Anlagefläche des zweiten Maschinenteiles stattfindet und eine gewisse Leckage eintritt. Zwar zeigt die am 26.5.88 veröffentlichte DE-C-36 20 539, daß der Raum zwischen den beiden Dichtkanten eines Dichtringes durch einen radialen Kanal mit der Seite des Dichtringes verbunden ist, an welcher der Spannring anliegt, jedoch hat bei der in der DE-C-36 20 539 beschriebenen Dichtungsanordnung der Spannring etwa die gleiche axiale Länge wie der Dichtring und es mündet der Kanal an einer Stelle, die sich nahe dem hochdruckseitigen Rand der Fläche befindet, auf welcher der Spannring am Dichtring anliegt.

Der Erfindung liegt die Aufgabe zugrunde, eine Dichtungsanordnung der eingangs genannten Art so auszubilden, daß ihre Herstellung vereinfacht ist und Störungen durch einen Druckaufbau an dem von den Dichtkanten begrenzenden Raum zwischen dem Dichtring und der Anlagefläche des zweiten Maschinenbauteiles nicht mehr auftreten können.

Diese Aufgabe wird nach der Erfindung dadurch gelöst, daß der Dichtring an seiner dem Nutgrund zugewandten Fläche eine den Spannring aufnehmende Ringnut mit im wesentlichen trapezförmigem Querschnitt, an deren Schrägflanken der Spannring zumindest im drucklosen Zustand dicht anliegt, und mindestens eine die Aussparung zwischen den Dichtkanten und dem Grund der Ringnut verbindende Radialbohrung aufweist.

Bei der erfindungsgemäßen Anordnung erfolgt also die Fixierung des Spannringes gegenüber dem Dichtring durch eine Nut in der Umfangsfläche des Dichtringes, die einen im wesentlichen trapezförmigen Querschnitt aufweist. Die Radialbohrungen, die den Raum zwischen den Dichtkanten von der vom Spannring belasteten Seite des Dichtringes verbinden, münden am Grund der Ringnut und damit bei fehlender Druckbelastung zentrisch zu dem den Dichtring belastenden Spannring. Allerdings erfährt im Betrieb der Spannring unter der Wirkung des Druckes des abzusperrenden Mediums eine gewisse Deformation nach der Niederdruckseite hin, wodurch auch der Anpreßdruck des Spannringes an der niederdruckseitigen Flanke der Ringnut erhöht und an der hochdruckseitigen Flanke der Ringnut vermindert wird, so daß dann, wenn der Druck des Mediums in dem von den Dichtkanten begrenzten Raum einen bestimmten Betrag überschreitet, der Spannring an der Hochdruckseite von der Flanke der Nut abgehoben wird und daher das unter überhöhtem Druck stehende Medium zur Hochdruckseite hin entweichen kann, also keine Leckage auftritt.Der besondere Vorteil der erfindungsgemäßen Dichtungsanordnung besteht nicht nur darin, daß ihr Aufbau wesentlich vereinfacht wird, weil in die zur Aufnahme der Dichtringe dienenden Nut keine zusätzliche Vertiefung eingestochen zu werden braucht und daher ihre Ringe in die Nut üblicher Dichtungsanordnungen eingelegt werden können, und daß wegen der Anordnung der Radialbohrungen in Verbindung mit dem Spannring eine Art Überdruckventil zur Entlastung des Ringraumes zwischen den beiden Dichtkanten des Dichtringes geschaffen wird, sondern es ist darüberhinaus ein besonderer Vorzug dieser Dichtung, daß sie bei symmetrischer Ausbildung des Dichtringes richtungsunabhängig, d.h. unabhängig davon wirksam ist, auf welcher Seite der Dichtungsanordnung sich das unter hohem Druck stehende Medium befindet. Daher ist diese Dichtungsanordnung besonders dort mit Vorteil einsetzbar, wo entsprechend den jeweils herrschenden Betriebsbedingungen ein Wechsel der Seiten eintreten kann, an denen sich das unter hohem Druck stehende Medium befindet. Endlich ist es auch von Vorteil, daß die Dichtungsanordnung gegen relativ große Toleranzen unempfindlich ist, weil wegen der Verformung, welche der Spannring bei seiner Einspannung zwischen dem Dichtring und dem Grund der Nut im ersten Maschinenbauteil infolge des Querschnittes der Ringnut erfährt, als Spannringe O-Ringe mit relativ großer Schnurdicke verwendet werden können, die eine relativ starke Verformung zulassen und daher auch gegen unterschiedliche Verformungen zur Aufnahme von Toleranzen unempfindlich sind.

Während einerseits ein einfacher O-Ring als Spannring ausreicht, kann der Dichtring zur optimalen Anpassung an den jeweiligen Anwendungszweck sehr unterschiedliche Querschnitte aufweisen. Insbesondere kann wenigstens eine der Dichtkanten von dem Rand der Umfangsfläche eines am Ende des Dichtringes angeordneten, ringförmigen Steges gebildet werden, wie es schon bei der eingangs erwähnten Dichtung nach der DE-C-36 13 880 der Fall ist. Dabei kann auch hier die Umfangsfläche des Steges mit der Anlagefläche des zweiten Maschinenteiles einen sich in Richtung auf die benachbarte Stirnfläche des Dichtringes öffnenden, kleinen Winkel bilden. Unter "kleiner Winkel" sollen dabei Winkel bis zu etwa 10° verstanden werden.

Ein solcher kleiner Winkel kann allerdings auch schon dadurch entstehen, daß der Dichtring im Bereich zwischen seinen beiden Dichtkanten durch den Druck des Spannringes durchgebogen wird, so daß sich die außerhalb der Dichtkanten liegenden Abschnitte des Dichtringes von der Anlagefläche des zweiten Maschinenbauteiles abheben.

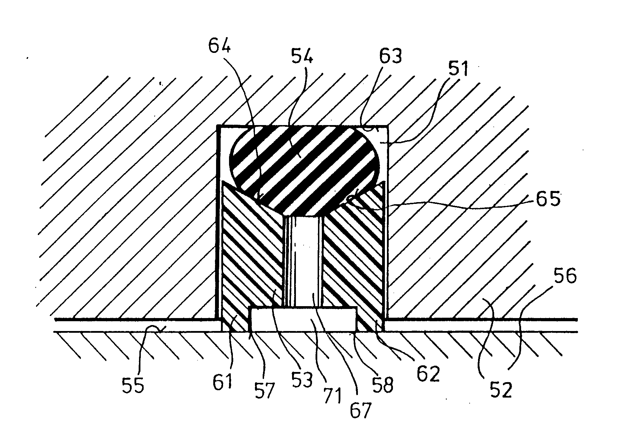

Weitere Einzelheiten und Ausgestaltungen der Erfindung ergeben sich aus der folgenden Beschreibung des in der Zeichnung als Ausführungsbeispiel dargestellten Querschnitts durch eine Dichtungsanordnung nach der Erfindung. Die der Beschreibung und der Zeichnung zu entnehmenden Merkmale können bei anderen Ausführungsformen der Erfindung einzeln für sich oder zu mehreren in beliebiger Kombination Anwendung finden.

Die Zeichnung zeigt eine Dichtungsanordnung, bei der sich in der Nut 51 eines ersten Maschinenbauteiles 52 ein symmetrisch ausgebildeter Dichtring 53 befindet, der aus einem zähelastischen Kunststoff besteht und mit seiner inneren Umfangsfläche an der Anlagefläche 55 eines zweiten Maschinenteiles 56 anliegt. Der Dichtring 53 ist an seiner inneren Umfangsfläche mit einer ringförmigen Aussparung 71 versehen, so daß der Dichtring 53 an seinen beiden Enden jeweils einen die ringförmige Aussparung 71 begrenzenden Steg 61 bzw. 62 aufweist, von denen jeder eine Dichtkante 57 bzw. 58 bildet. Zwischen diesen beiden Dichtkanten 57, 58 befindet sich der von der ringförmigen Aussparung 71 gebildete Raum, in dem sich ein Druckmedium ansammeln kann. Dieser Raum steht über wenigstens eine Radialbohrung 67 mit der entgegengesetzten Seite des Dichtringes 53 in Verbindung. Die Radialbohrung 67 mündet am Grund einer Ringnut mit trapezförmigem Querschnitt, die durch vom Grund dieser Ringnut ansteigenden Schrägflanken 64, 65 begrenzt wird. In dieser Ringnut liegt ein aus einem gummielastischen Material bestehender Spannring 54, der zwischen dem Dichtring 53 und einem Nutgrund 63 der Nut 51 im ersten Maschinenbauteil 52 eingespannt ist.

Die als Ausführungsbeispiel dargestellte Anordnung ist voll symmetrisch ausgebildet. Daher ist sie unabhängig davon wirksam, an welcher Seite sich das unter einem höheren Druck stehende, abzudichtende Medium befindet. Befindet sich das unter höherem Druck stehende Medium auf der in der Zeichnung linken Seite der Dichtungsanordnung, wird durch Druckbelastung der Dichtring 53 an die rechte Schrägflanke 65 der Nut 51 angelegt und auch entsprechend der Spannring 54 etwas nach rechts verformt, wodurch die Pressung an der hochdruckseitigen, linken Schrägflanke 64 der Ringnut im Dichtring 53 und ebenso auch die Kraft, die zum Abheben des Spannringes 54 von den von den Mündungen der Radialbohrung 67 erforderlich ist, vermindert wird. In die ringförmige Aussparung 71 eingeschleppte Druckflüssigkeit kann daher bei Erreichen eines gewissen Überdruckes durch die Radialbohrung 67 entlang der Flanke 64 der Ringnut des Dichtringes 53 zur Hochdruckseite hin entweichen, weil die Flächenpressung des Spannringes 54 an dieser hochdruckseitigen Flanke 64 erheblich geringer ist als an der gegenüberliegenden, niederdruckseitigen Flanke 65. Wäre jedoch der höhere Druck auf der in Zeichnung rechts von der Dichtungsanordnung gelegenen Seite, so fände eine entsprechende Verlagerung des Dichtringes 53 und des Spannringes 54 nach links statt mit der Möglichkeit, daß in die ringförmige Aussparung 71 eingeschleppte Druckflüssigkeit bei Erreichen eines bestimmten Überdruckes an der weniger belasteten, hochdruckseitigen Flanke 65 der Ringnut im Dichtring 53 abfließen kann. Es handelt sich hierbei also um eine in ihrer Wirkung richtungsunabhängige Dichtung, die besonders dann mit Vorteil eingesetzt werden kann, wenn eine Abdichtung zwischen zwei Räumen erfolgen soll, in denen häufige Druckwechsel auftreten, so daß einmal der linke Raum gegenüber dem rechten und dann der rechte Raum gegenüber dem linken einen Überdruck aufweist. Entsprechende, gegeneinander abzudichtende Arbeitsräume kommen insbesondere bei Arbeitsmaschinen mit hydraulischen Antrieben sehr häufig vor.

Es versteht sich, daß die Erfindung nicht auf die dargestellten Ausführungsbeispiele beschränkt ist. So könnten insbesondere die an den Enden des Dichtringes 53 angebrachten Stege 61, 62 Umfangsflächen aufweisen, die mit der Anlagefläche 55 des zweiten Maschinenbauteiles 56 einen kleinen Winkel bilden, der sich in Richtung auf die benachbarte Stirnfläche des Ringes öffnet. Ein solcher Winkel, dessen Größe höchstens 10° betragen sollte, braucht nicht bereits am entspannten Dichtring vorhanden zu sein, sondern kann sich dadurch ergeben, daß sich der Dichtring 53 unter der Kraft des Spannringes 54 leicht durchbiegt. Weiterhin eignet sich die erfindungsgemäße Dichtungsanordnung nicht nur zum Abdichten von in Axialrichtung der Dichtungsanordnung hin-und hergehenden Teilen, also insbesondere von Kolbenstangen gegenüber Gehäusen, sondern auch zur Abdichtung von gegeneinander rotierenden Teilen, also insbesondere von Wellen. Dabei ist von besonderer Bedeutung, daß der Spannring 54, der stets von dem unter Hochdruck stehenden Medium in einen sich infolge der Schrägflanken 64, 65 der trapezförmigen Ringnut in Axialrichtung verengenden Spalt hineingepreßt wird, sehr hohe Reibungskräfte zwischen dem Spannring 54 einerseits und dem einen ersten Maschinenbauteil 52 bzw. dem Dichtring 53 andererseits erzeugt, wodurch gewährleistet ist, daß der Dichtring 53 keine Drehung gegenüber dem mit der Nut 51 versehenen, ersten Maschinenbauteil 52 ausführt, sondern die gleitende Berührung ausschließlich zwischen dem zweiten Maschinenbauteil 56 und dem Dichtring 53 stattfindet
Endlich sei noch erwähnt, daß insbesondere bei Verwendung der Dichtungsanordnung zum Abdichten einer hin- und hergehenden Stange das Einschleppen des Druckmediums in die von den Dichtkanten 57, 58 begrenzte ringförmige Aussparung 71 und der in diesem Raum stattfindende Druckaufbau zum Ergebnis hat, daß eine Entlastung der Dichtkanten 57, 58 stattfindet, die auch dann erhalten bleibt, wenn keine Druckdifferenz zwischen den beiden von der Dichtungsanordnung getrennten Seiten mehr besteht, weil der durch den Spannring 54 abgeschlossene Druckraum nur dann geöffnet wird, wenn der Druck innerhalb der genannten ringförmigen Aussparung 71 den Mediendruck um ein durch die Anpreßkraft des Spannringes 54 bestimmtes Maß überschreitet.

## Patentansprüche

1. Anordnung zum Abdichten des Spaltes zwischen zwei zueinander konzentrischen, gegeneinander beweglichen Maschinenbauteilen (52, 56), von denen das erste Maschinenbauteil (52) eine Nut (51) und das zweite Maschinenbauteil (56) eine der Nut (51) gegenüberliegende glatte Anlagefläche (55) aufweist, mit einem in die Nut (51) des ersten Maschinenbauteiles (52) eingelegten in bezug auf seine Mittelebene symmetrisch ausgebildeten Dichtring (53) aus zähelastischem Kunststoff, dessen der Anlagefläche (55) zugewandte Umfangsfläche eine ringförmige Aussparung (71) aufweist, so daß er mit nahe seinen Enden angeordneten Dichtkanten (57, 58) an der Anlagefläche (55) des zweiten Maschinenbauteiles (56) anliegt, und mit einem zwischen Dichtring (53) und Nutgrund (63) angeordneten, den Dichtring (53) radial belastenden Spannring (54) aus gummielastischem Material, dessen axiale Ausdehnung geringer ist als diejenige des Dichtringes (53) und dessen axiale Lage in bezug auf den Dichtring (53) derart fixiert ist, daß er sich etwa mittig zwischen den beiden Dichtkanten (57, 58) befindet,
dadurch gekennzeichnet,
daß der Dichtring (53) an seiner dem Nutgrund (63) zugewandten Fläche eine den Spannring (54) aufnehmende Ringnut mit im wesentlichen trapezförmigen Querschnitt, an deren Schrägflanken (64, 65) der Spannring (54) zumindest im drucklosen Zustand dicht anliegt, und mindestens eine die ringförmige Aussparung (71) zwischen den Dichtkanten (57, 58) und dem Grund der Ringnut verbindende Radialbohrung (67) aufweist.

2. Anordnung nach Anspruch 1, dadurch gekennzeichnet, daß wenigstens eine der Dichtkanten (57, 58) von dem Rand der Umfangsfläche eines am Ende des Dichtringes (53) angeordneten, ringförmigen Steges (61, 62) gebildet wird.

3. Anordnung nach Anspruch 2, dadurch gekennzeichnet, daß die Umfangsfläche des Steges (61, 62) mit der Anlagefläche (55) des zweiten Maschinenbauteiles (56) einen sich in Richtung auf die benachbarte Stirnfläche des Dichtringes (53) öffnenden, kleinen Winkel bildet.

## Claims

1. An arrangement for sealing the gap between two machine components (52, 56) which are concentric to each other and movable relative to each other, the first machine component (52) having a groove (51) and the second machine component (56) having a smooth contact surface (55) facing said groove (51), comprising a sealing ring (53) made of toughened-elastic plastics, formed symmetrically, relative to its median plane, and placed into the groove (51) of the first machine component (52), the peripheral area of said sealing ring, which faces said contact surface (55), having an annular recess (71) so that said sealing ring bears against the contact surface (55) of the second machine component (56), by means of its sealing edges (57, 58) arranged close to its ends, and comprising a locking ring (54) made of elastic gum material, arranged between said sealing ring (53) and the groove base (63) and applying radial stress to the sealing ring (53), the axial extent of said locking ring (54) being less than that of the sealing ring (53) and the axial position thereof, relative to the sealing ring (53) being secured such that said locking ring is located centrally between the two sealing edges (57, 58), characterised in that the sealing ring (53) has an annular groove, receiving the locking ring (54), on its surface facing the groove base (63), said annular groove having a substantially trapezium-shaped cross-section, the locking ring (54) closely bearing against the inclined sides (64, 65) thereof at least in the unstressed state, and at least a radial bore (67) connecting the annular recess (71) between the sealing edges (57, 58) and the base of the annular groove.

2. An arrangement according to Claim 1, characterised in that at least one of the sealing edges (57, 58) is formed by the edge of the peripheral area of an annular flange (61, 62) arranged at the end of the sealing ring (53).

3. An arrangement according to Claim 2, characterised in that the peripheral area of the flange (61, 62) forms, together with the contact surface (55) of the second machine component (56), a small angle opening in the direction of the adjacent end face of the sealing ring (53).

## Revendications

1. Agencement pour rendre étanche l'interstice entre deux parties constitutives (52, 56) de machine qui sont concentriques l'une par rapport à l'autre et mobiles l'une par rapport à l'autre et dont la première partie constitutive de machine (52) présente une rainure (51)et la seconde partie constitutive de machine (56) présente une surface d'appui (55) unie opposée à la rainure (51), comportant un anneau d'étanchéité (53) en matière synthétique viscoélastique qui est inséré dans la rainure (51) de la première partie constitutive de machine (52), qui est réalisé symétriquement par rapport à son plan médian et dont la surface périphérique tournée vers la surface d'appui (55) présente un évidement annulaire (71) de sorte que l'anneau soit appliqué sur la surface d'appui (55) de la seconde partie constitutive de machine (56) par des arêtes d'étanchéité (57, 58) agencées près de ses extrémités, et comportant un anneau de serrage (54), en matière caoutchouteusement élastique, qui est agencé entre anneau d'étanchéité (53) et fond de rainure (63), qui sollicite radialement l'anneau d'étanchéité (53), dont l'expansion axiale est plus faible que celle de l'anneau d'étanchéité (53) et dont la position axiale par rapport à l'anneau d'étanchéité (53) est fixée de façon qu'il soit situé approximativement au milieu entre les deux arêtes d'étanchéité (57, 58), caractérisé en ce que l'anneau d'étanchéité (53) présente sur sa surface tournée vers le fond de rainure (63) une rainure annulaire qui a une section transversale sensiblement trapézoïdale, où est logé l'anneau de serrage (54) et sur les flancs inclinés (64, 65) de laquelle est appliqué de façon étanche l'anneau de serrage (54), au moins à l'état sans pression, et en ce que l'anneau d'étanchéité présente au moins un perçage radial (67) reliant l'évidement annulaire (71) entre les arêtes d'étanchéité (57, 58) et le fond de la rainure annulaire.

2. Agencement suivant la revendication 1, caractérisé en ce qu'au moins une des arêtes d'étanchéité (57, 58) est formée à partir du bord de la surface périphérique d'une nervure annulaire (61, 62) agencée à l'extrémité de l'anneau d'étanchéité (53).

3. Agencement suivant la revendication 2, caractérisé en ce que la surface périphérique de la nervure (61, 62) forme avec la surface d'appui (55) de la seconde partie constitutive de machine (56) un petit angle qui s'ouvre en direction de la face frontale voisine de l'anneau d'étanchéité (53).
